# EUROPEAN PATENT APPLICATION

(11) **EP 4 687 280 A1**
(43) Date of publication of application: **04.02.2026**
(21) Application number: 25166405.8
(22) Date of filing: 26.03.2025
(51) Int. Cl.: H02M 7/5387, H02M 7/5395, H02M 3/158, H02M 1/42, H02M 1/44, H02M 1/00, H02P 29/50

(54) **MOTOR POWER SOURCE REGULATION CIRCUIT, CONTROL METHOD AND ELECTRONIC DEVICE**

(30) Priority: 29.07.2024 CN 202411024677
(71) Applicant: Shenzhen Megmeet Electrical Co., Ltd., Shenzhen, Guangdong 518057 (CN); Hunan Megmeet Electrical Technology Co., Ltd, Changsha Hunan Province 410141 (CN)
(72) Inventor: Li, Xiaobing, SHENZHEN (CN); Li, Youqing, SHENZHEN (CN)
(74) Representative: Gong, Jinping

(57) **Abstract**

This application relates to a motor power source regulation circuit, a control method and an electronic device. The motor power source regulation circuit includes a power factor correction circuit, an isolation circuit, a first power source conversion circuit (s), a second power source conversion circuit (s) and a control circuit. The isolation circuit includes a first switch sub-circuit and an isolation transformer. The power factor correction circuit regulates an AC input signal to a first DC signal. The first switch sub-circuit converts the first DC signal to a first AC signal. The isolation transformer converts the first AC signal to two or more second AC signals. The first power source conversion circuit converts the second AC signal to a DC drive signal and outputs it to a DC motor. The second power source conversion circuit converts the second AC signal to an AC drive signal and outputs it to an AC motor.

## Description

The present application claims the benefit of priority to Chinese Patent Application No. 202411024677.9, filed on July 29, 2024, which is hereby incorporated by reference in its entirety.

### TECHNICAL FIELD

The embodiments of this application relate to a power source technology field, and more particularly, to a motor power source regulation circuit, a control method and an electronic device.

### TECHNICAL BACKGROUND

Nowadays, based on different load power characteristics, there are different requirements for input power sources of various motor power source application equipment. The common motor power sources include an independent rectifier module and drive module to form an entire drive system of the motor.

Where, every module has relevant independent circuits which shall be separately controlled. Therefore, the entire drive system is complex and is low in efficiency and reliability. In particular, the power supply control involving many motor loads is more complex.

### SUMMARY

The embodiments of this application provide a motor power source regulation circuit, a control method and an electronic device which can solve the problem in prior art that the drive system of the motor power source regulation circuit is complex and is low in efficiency and reliability.

A technical scheme in this application for solving the above technical problem is to provide a motor power source regulation circuit, wherein, the motor power source regulation circuit includes: a power factor correction circuit for coupling with an AC power source to receive an AC input signal from the AC power source and convert the AC input signal to a first DC signal; an isolation circuit which includes a first switch sub-circuit and an isolation transformer, of which the isolation transformer includes one piece of primary winding and two or more pieces of secondary winding coupled with the primary winding and the first switch sub-circuit is coupled with the power factor correction circuit and the primary winding; a first power source conversion circuit (s) of which every first power source conversion circuit is coupled with one piece of the secondary winding and for coupling with a DC motor; a second power source conversion circuit (s) of which every second power source conversion circuit is coupled with one piece of the secondary winding and for coupling with an AC motor; a control circuit coupled with the power factor correction circuit, the first switch sub-circuit, every first power source conversion circuit and every second power source conversion circuit to obtain the AC input signal by sampling and to regulate a first characteristic parameter of a first control signal based on the AC input signal; where, the power factor correction circuit receives the first control signal from the control circuit and regulates the AC input signal to the first DC signal based on the first control signal; every first switch sub-circuit receives the first DC signal from the power factor correction circuit and a first drive signal from the control circuit and converts the first DC signal to a first AC signal based on the first drive signal; the primary winding receives the first AC signal from the first switch sub-circuit and converts the first AC signal to two or more second AC signals by utilizing two or more pieces of the secondary winding; every first power source conversion circuit receives the second AC signal from every secondary winding, converts the second AC signal to a DC drive signal and outputs the DC drive signal to the DC motor; every second power source conversion circuit receives the second AC signal from every secondary winding, converts the second AC signal to an AC drive signal and outputs the AC drive signal to the AC motor.

Where, the control circuit obtains the first DC signal by sampling, regulates a second characteristic parameter of a second control signal based on the first DC signal and sends the second control signal to the power factor correction circuit which limits the first DC signal within a first threshold range based on the second control signal; where, the first characteristic parameter is positively correlated with the AC input signal, and the power factor correction circuit responds to the first control signal with a higher priority than responding to the second control signal; the control circuit obtains the DC drive signal by sampling, regulates a third characteristic parameter of a third control signal based on the DC drive signal, and sends the third control signal to the first power source conversion circuit which limits the DC drive signal within a second threshold range based on the third control signal; the control circuit obtains the AC drive signal by sampling, regulates a fourth characteristic parameter of a fourth control signal based on the AC drive signal and sends the fourth control signal to the second power source conversion circuit which limits the AC drive signal within a third threshold range based on the fourth control signal.

Where, the motor power source regulation circuit also includes a standby power source, a power input conversion circuit and a power supply busbar; the power input conversion circuit is coupled with the standby power source, the power supply busbar and the control circuit; the power supply busbar is coupled with the power factor correction circuit and the first switch sub-circuit; the power input conversion circuit receives a power input signal from the standby power source, converts and superposes the power input signal to/with the first DC signal, and outputs the first DC signal to the power supply busbar which sends the first DC signal to the first switch sub-circuit; the control circuit obtains the power input signal by sampling, regulates a fifth characteristic parameter of a fifth control signal based on the power input signal and sends the fifth control signal to the power input conversion circuit which regulates the first DC signal based on the fifth control signal; where, the fifth characteristic parameter is positively correlated with the power input signal.

Where, the second power source conversion circuit also includes a second switch sub-circuit and an inverter circuit; the second switch sub-circuit is coupled with the secondary winding and the inverter circuit, and the inverter circuit is for coupling with the AC motor; where, the second switch sub-circuit receives the second AC signal from the secondary winding and a second drive signal from the control circuit, and converts the second AC signal to a second DC signal based on the second drive signal; the inverter circuit receives the second DC signal from the second switch sub-circuit and the fourth control signal from the control circuit, and converts the second DC signal to the AC drive signal based on the fourth control signal.

Where, the first switch sub-circuit includes a first capacitor, a first switch tube, a second switch tube, a third switch tube, a fourth switch tube, a second capacitor and a first inductor; where, the first end of the first capacitor is coupled with the first end of the power factor correction circuit, the first end of the first switch tube and the first end of the second switch tube; the second end of the first capacitor is coupled with the second end of the power factor correction circuit, the second end of the third switch tube and the second end of the fourth switch tube; the second end of the first switch tube is coupled with the first end of the third switch tube and the first end of the second capacitor; the second end of the second switch tube is coupled with the first end of the fourth switch tube and the second end of the primary winding; the second end of the second capacitor is coupled with the first end of the first inductor; the second end of the first inductor is coupled with the first end of the primary winding; the third ends of the first switch tube, the second switch tube, the third switch tube and the fourth switch tube are connected with the control circuit.

Where, the power factor correction circuit includes a first diode, a second diode, a third diode, a fourth diode, a fifth inductor, a sixth inductor, a fifth diode, a sixth diode, a fifteenth switch tube, a sixteenth switch tube and a sixth capacitor; where, the first end of the first diode is coupled with the second end of the third diode and the first end of the AC power source; the second end of the first diode is coupled with the second end of the second diode, the first end of the fifth inductor and the first end of the sixth inductor; the first end of the second diode is coupled with the second end of the fourth diode and the second end of the AC power source; the first end of the third diode is coupled with the first end of the fourth diode, the second end of the fifteenth switch tube, the second end of the sixteenth switch tube and the second end of the sixth capacitor; the second end of the fifth inductor is coupled with the first end of the fifth diode and the first end of the fifteenth switch tube; the second end of the sixth inductor is coupled with the first end of the sixth diode and the first end of the sixteenth switch tube; the second end of the fifth diode is coupled with the second end of the sixth diode and the first end of the sixth capacitor; the third ends of the fifteenth switch tube and the sixteenth switch tube are coupled with the control circuit.

Another technical scheme in this application for solving the above technical problem is to provide a motor power source control method. Where, the motor power source control method includes receiving an AC input signal from an external AC power source; regulating a first characteristic parameter of a first control signal based on the AC input signal; converting the AC input signal to a first DC signal based on the first control signal; converting the first DC signal to a first AC signal based on the first drive signal; converting the first AC signal to two or more second AC signals; converting the second AC signal to a DC drive signal and outputting the DC drive signal to an external DC motor; converting the second AC signal to an AC drive signal and outputting the AC drive signal to an external AC motor.

Where, a step after converting the AC input signal to a first DC signal based on the first control signal and before converting the first DC signal to a first AC signal based on the first drive signal also includes regulating a fifth characteristic parameter of a fifth control signal based on a power input signal; where, the fifth characteristic parameter is positively correlated with the power input signal; converting and superposing the power input signal to/with the first DC signal based on the fifth control signal.

Where, the step of converting the second AC signal to an AC drive signal includes converting the second AC signal to a second DC signal based on a second drive signal; converting the second DC signal to an AC drive signal based on a fourth control signal.

Another technical scheme in this application for solving the above technical problems is to provide an electronic device. Where, the electronic device includes a coupled shell and a motor power source regulation circuit; where, the motor power source regulation circuit is a motor power source regulation circuit in any of above claims.

The beneficial effects of this application are as follows: different from prior art, the power factor correction circuit in the motor power source regulation circuit receives the first control signal from the control circuit and regulates the AC input signal to the first DC signal based on the first control signal; every first switch sub-circuit receives the first DC signal from the power factor correction circuit and the first drive signal from the control circuit and converts the first DC signal to the first AC signal based on the first drive signal; the primary winding receives the first AC signal from the first switch sub-circuit and converts the first AC signal to two or more second AC signals by utilizing two or more pieces of the secondary winding; every first power source conversion circuit receives the second AC signal from every secondary winding, converts the second AC signal to the DC drive signal and outputs the DC drive signal to the DC motor; every second power source conversion circuit receives the second AC signal from every secondary winding, converts the second AC signal to the AC drive signal and outputs the AC drive signal to the AC motor. Therefore, many circuits are integrated in one module and one control circuit can control the power factor correction circuit, the first power source conversion circuit and the second power source conversion circuit, which effectively simplifies the system hardware circuits and improves the reliability and efficiency of drive control. Furthermore, compared with responding to signal feedback regulation to motor loads, the drive control by responding to the AC input signal from the AC power source effectively ensures the control timeliness, improves the control efficiency and guarantees the optimization of the entire motor drive conversion efficiency. In addition, compared with an independent isolation transformer in every motor load, the multi-winding transformer further enhances the integration of motor power source regulation circuits and simplifies the drive control of control circuits. Besides, the isolation transformer can realize the electric isolation and voltage matching of primary and secondary edges according to safety regulations to meet the insulation requirements for primary and secondary edges in electrical safety regulations.

### BRIEF DESCRIPTION OF DRAWINGS

To provide a clearer explanation of the technical schemes in the embodiments of this application, a brief introduction will be given to the drawings required in the description of the embodiments. Obviously, the drawings in the following description are only some embodiments of the application. The persons skilled in the art can obtain other drawings based on these drawings without putting in creative labor. Where:
FIG. 1 illustrates a structural schematic diagram of the first embodiment of the motor power source regulation circuit in this application;
FIG. 2 illustrates a structural schematic diagram of the second embodiment of the motor power source regulation circuit in this application;
FIG. 3 illustrates a structural schematic diagram of the third embodiment of the motor power source regulation circuit in this application;
FIG. 4 illustrates a structural schematic diagram of an embodiment of the first switch sub-circuit in the motor power source regulation circuit in FIG. 3;
FIG. 5 illustrates a structural schematic diagram of the first embodiment of the power factor correction circuit in the motor power source regulation circuit in FIG. 3;
FIG. 6 illustrates a structural schematic diagram of the second embodiment of the power factor correction circuit in the motor power source regulation circuit in FIG. 3;
FIG. 7 illustrates a structural schematic diagram of the third embodiment of the power factor correction circuit in the motor power source regulation circuit in FIG. 3;
FIG. 8 illustrates a structural schematic diagram of the fourth embodiment of the power factor correction circuit in the motor power source regulation circuit in FIG. 3;
FIG. 9 illustrates a structural schematic diagram of an embodiment of the second switch sub-circuit in the motor power source regulation circuit in FIG. 3;
FIG. 10 illustrates a structural schematic diagram of an embodiment of the inverter circuit in the motor power source regulation circuit in FIG. 3;
FIG. 11 illustrates a flow chart of the first embodiment of the motor power source control method in this application;
FIG. 12 illustrates a flow chart of an embodiment of S47 in FIG. 11;
FIG. 13 illustrates a flow chart of the second embodiment of the motor power source control method in this application;
FIG. 14 illustrates a framework diagram of an embodiment of the electronic device in this application.

### DETAILED DESCRIPTION

The following will provide a clear and complete description of the technical schemes of the embodiments in this application by combining with the drawings. Obviously, the described embodiments are only a portion of the embodiments in this application, and not all. Based on the embodiments in this application, all other embodiments obtained by the persons skilled in the art without putting in creative labor are within the protection scope of this application.

In this application, the terms "first", "second", "third" and other ordinal numbers are only for description and may not be understood as indicating or implying relative importance or implying the number of technical features. Therefore, the "first", "second", "third"...... features can explicitly or implicitly include one or more features. In the description of this application, the term "a plurality of" means two or more, unless otherwise specified. In addition, the terms "include", "comprise" and any other variants are intended to covering non-exclusive inclusion. For example, a series of steps or units included in a process, a method, a system, a product or a device are not limited to the listed steps or units, but in some embodiments, may include steps or units that are not listed, or may include other steps or units inherent to the process, the method, the product or the device.

The term "embodiment" in this application means that specific features, structures or characteristics described by combining the embodiments may be included in one or more embodiments in this application. The term "embodiment" in different positions in the specification is not necessarily the same embodiment, nor an independent or alternative embodiment that is exclusive with other embodiments. Persons skilled in the art explicitly and implicitly understand that the embodiments in this application may be combined with other embodiments.

A detailed explanation of this application will be provided in combining with the drawings and embodiments as follow.

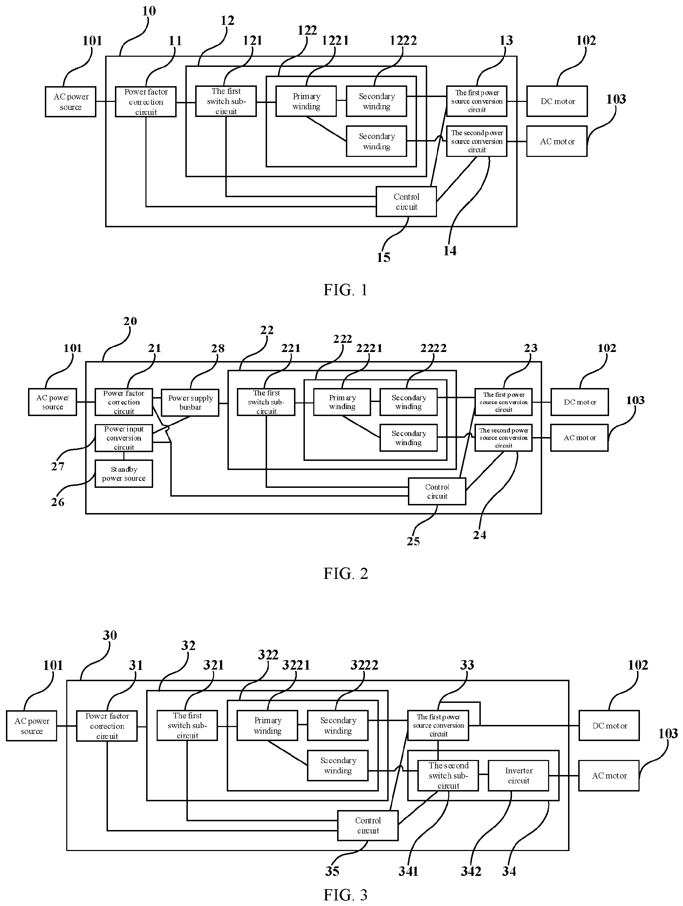

Referring to FIG. 1, FIG. 1 illustrates a structural schematic diagram of the first embodiment of the motor power source regulation circuit in this application. In this embodiment, the motor power source regulation circuit 10 includes a power factor correction circuit 11, an isolation circuit 12, a first power source conversion circuit 13, a second power source conversion circuit 14 and a control circuit 15.

Where, the motor power source regulation circuit 10 in this application is applied in a DC motor 102 and an AC motor 103, such as a DC motor 102, a single-phase AC motor 103 and/or a three-phase AC motor 103, for the purpose of obtaining power from grids, converting and regulating the power and supplying the power to the DC motor 102 and the AC motor 103 to drive the DC motor 102 and the AC motor 103.

Specifically, the motor power source regulation circuit 10 may be understood as an electrical energy conversion system with the core components which include the power factor correction circuit 11, the first power source conversion circuit 13 and the control circuit 15, for coordination to ensure efficient and stable operation of the DC motor 102.

Where, the power factor correction circuit 11 is for coupling with the AC power source 101 to receive the AC input signal from a power grid, and converts the AC signal to a smooth and stable first DC signal by electronic control technology. This conversion process is conducive to improving the energy efficiency and stability of the entire system.

It is worth noting that the AC power source 101 may be understood as an AC power source of power grid or a power source regulation circuit which converts and regulates the power from grids to obtain AC power output.

In addition, the term "coupling" in this application refers to any direct and indirect means of connection. Therefore, the description that the first circuit is coupled with the second circuit in the application means that the first circuit may be directly connected with the second circuit by electrical connection or signal connection such as wireless transmission and optical transmission, or indirectly connected with the second circuit through other circuits or connection means by electrical connection or signal connection.

Further, the isolation circuit 12 includes a first switch sub-circuit 121 and an isolation transformer 122. The isolation transformer 122 includes a piece of primary winding 1221 and two or more pieces of secondary winding 1222. The first switch sub-circuit 121 is coupled with the power factor correction circuit 11 and the primary winding 1221. Two or more pieces of secondary winding 1222 are coupled and electrically isolated with the primary winding 1221 to prevent direct electrical connection between the primary circuit and the secondary circuits, enhancing the system safety, especially systems between a high voltage circuit and a low voltage circuit or systems between a sensitive circuit and a noisy power circuit. In addition, two or more pieces of secondary winding 1222 may also be corresponding to different turn ratios to convert the electrical energy on the primary edge to outputs at different voltage levels for meeting the voltage demands of different loads.

The number of first power source conversion circuits 13 may be one or more. Every first power source conversion circuit 13 is coupled with one piece of the secondary winding 1222 and is for coupling with the DC motor 102.

The number of second power source conversion circuits 14 may be one or more. Every second power source conversion circuit 14 is coupled with one piece of the secondary winding 1222 and is for coupling with the AC motor 103.

In some embodiments, if the number of the first power source conversion circuits 13 is more than one, the number of the DC motors 102 coupled with the first power source conversion circuits 13 may be the same with or different from the number of the first power source conversion circuits 13 for connecting with the secondary winding 1222 with the same or different turn ratios; if the number of the second power source conversion circuits 14 is more than one, the number of the AC motors 103 coupled with the second power source conversion circuits 14 may be the same with or different from the number of the second power source conversion circuits 14; the AC motors 103 may be single-phase AC motors 103 and/or three-phase AC motors. There is no relevant limitation in this application.

It is worth noting that the first power source conversion circuit 13 is practically corresponding to a DC chopper, i.e. rectifier circuit, and any of reasonable circuits to achieve DC to DC conversion, such as full bridge rectifier circuits, half bridge rectifier circuits or full wave rectifier circuits, to meet the drive demand of the DC motor 102 in different working conditions. There is no relevant limitation in this application.

In addition, the second power source conversion circuit 14 is corresponding to an inverter circuit, and any of reasonable circuits to achieve DC to AC conversion such as full bridge inverter circuits, symmetrical half bridge circuits or asymmetric half bridge circuits and is used in any of reasonable motor drive control strategies, such as Space Vector Pulse Width Modulation (SVPWM), Sinusoidal Pulse Width Modulation (SPWM), Direct torque control (DTC) or Field-Oriented Control (FOC), which realizes regulation and control of current, voltage and frequency of DC to AC conversion, to meet the drive demands of AC motors 103 in different working conditions and realize the efficient speed regulation and control of motors.

Where, the control circuit 15 is coupled with the power factor correction circuit 11, the first switch sub-circuit 121, every first power source conversion circuit 13 and every second power source conversion circuit for sampling and analyzing the AC input signal in the power factor correction circuit 11 and dynamically regulating a first characteristic parameter of a first control signal sent to the power factor correction circuit 11 based on the AC input signal.

In some embodiments, the first control signal may be one or more signal (s) of reasonable control signals, such as Pulse Width Modulation (PWM) or Pulse Frequency Modulation (PFM) signals. There is no relevant limitation in this application.

In some embodiments, the first characteristic parameter may be one or more parameter (s) of reasonable parameters, such as duty cycle and frequency. The ON/OFF states of the above-mentioned switch tubes and/or switch contacts correspond to ON/OFF time ratio and/or switching frequency. There is no relevant limitation in this application.

Where, the power factor correction circuit 11 also receives the first control signal from the control circuit 15 and regulates the ON/OFF state of all switch tubes and/or switch contacts based on the first control signal so as to dynamically regulate the current output of the power factor correction circuit 11, i.e. the first DC signal, for the purpose of meeting the drive demand of all motor loads in different working conditions.

Every first switch sub-circuit 121 receives the first DC signal from the power factor correction circuit 11 and the first drive signal from the control circuit 15, converts the first DC signal to the first AC signal based on the timing control of the first drive signal and generates a required AC waveform by accurate switch control.

The primary winding 1221 of the isolation transformer 122 receives the first AC signal from the first switch sub-circuit 121. Two or more pieces of secondary winding 1222 convert the first AC signal to two or more second AC signals by electromagnetic induction. This design realizes efficient energy transfer and electrical isolation, improving the safety and stability of the system.

The second AC signal from every secondary winding 1222 may be received by a corresponding first power source conversion circuit 13 which converts the second AC signal to a DC drive signal and sends the DC drive signal to the DC motor 102. This conversion often covers the rectification and filtration process to ensure the stability and applicability of outputting DC signals.

Simultaneously, the second AC signals from some other pieces of secondary winding 1222 may be received by corresponding second power source conversion circuits 14. These second power source conversion circuits 14 convert the second AC signals to AC drive signals and send the AC drive signals to the AC motor 103. This conversion may involve inversion process to generate AC power which meets the requirements of the AC motor 103.

In summary, the precise control and conversion mechanism realizes efficient power energy conversion and distribution from AC input to DC motor 102 and AC motor 103. This scheme is suitable for complex application scenarios to simultaneously drive DC and AC loads, such as hybrid vehicles, industrial automation equipment, etc.

In above scheme, many circuits are integrated in one module and one control circuit 15 can control the power factor correction circuit 11 and the first power source conversion circuit 13, which effectively simplifies the system hardware circuits and improves the reliability and efficiency of drive control. Furthermore, compared with responding to signal feedback regulation to motor loads, the drive control by responding to the AC input signal from the AC power source 101 effectively ensures the control timeliness, improves the control efficiency and guarantees the optimization of the entire motor drive conversion efficiency. In addition, compared with an independent isolation transformer 122 in every motor load, the multi-winding transformer further enhances the integration of motor power source regulation circuits 10 and simplifies the drive control of control circuits 15. Besides, the isolation transformer 122 can realize the electric isolation and voltage matching of primary and secondary edges according to safety regulations to meet the insulation requirements for primary and secondary edges in electrical safety regulations.

In one embodiment, the control circuit 15 obtains the first DC signal from the power factor correction circuit 11 by sampling and calculates and regulates the second characteristic parameter of the second control signal based on real-time data of the first DC signal.

Where, the power factor correction circuit 11 also receives the first control signal and/or the second control signal from the control circuit 15 and responds to the first control signal and/or the second control signal to regulate the ON/OFF state of all switch tubes and/or switch contacts and dynamically regulate the current output of the power factor correction circuit 11, i.e. the first DC signal, so as to limit the voltage and/or current and/or frequency of the first DC signal within a preset first threshold range for the purpose of meeting the drive demand of all motor loads in different working conditions.

It can be understood that the first threshold range is a reasonable voltage and/or current and/or frequency range to protect circuits in a rear stage from damage caused by over-voltage or over-current and maintain energy efficiency and stability of the system. When the control circuit 15 detects that the first DC signal is beyond the first threshold range, the control circuit 15 regulates the ON/OFF state of the power factor correction circuit 11 based on the first control signal and/or the second control signal to regulate the first DC signal to the value within the first threshold range.

Thus it can be seen that the control circuit 15 forms a closed loop control system by real-time monitoring, analysis, sending instructions and receiving feedback to ensure stable output of the first DC signal from the power factor correction circuit 11, thereby, optimizing the overall power factor correction effect and voltage conversion efficiency, and improving adaptability and reliability.

In some embodiments, the first threshold range is corresponding to a voltage threshold range with the difference between the upper limit and the lower limit of 6-12V and with optimal difference value of 10V. The limit is +/-5V of preset target voltage output value of the first DC signal. There is no relevant limitation in this application.

Where, the power factor correction circuit 11 responds to the first control signal with a higher priority than responding to the second control signal, i.e. when the power factor correction circuit 11 simultaneously receives the first control signal and the second control signal from the control circuit 15, the power factor correction circuit 11 responds to the first control signal with priority to regulate the first DC signal so as to respond to the change of the AC input signal with priority and regulate the first DC signal to the value within the first threshold range.

However, in other embodiments, when the control circuit 15 simultaneously obtains the AC input signal and the first DC signal by sampling, the control circuit 15 regulates the first characteristic parameter of the first control signal based on the AC input signal, sends the first control signal to the power factor correction circuit 11, and doesn't send the second control signal to the power factor correction circuit 11.

In another embodiment, when the control circuit 15 detects that the AC input signal is within the preset power input threshold range, the control circuit 15 doesn't send the first control signal to the power factor correction circuit 11 to avoid unnecessary frequent regulation to the ON/OFF state of the power factor correction circuit 11 caused by normal fluctuations in the power input of the AC power source 101, and responds to the first DC signal to send the second control signal to the power factor correction circuit 11 so as to regulate the first DC signal to the value within the first threshold range based on the second control signal; when the control circuit 15 detects that the first DC signal is within the preset power output threshold range, i.e. the first threshold range, the control circuit 15 doesn't regulate the second characteristic parameter of the second control signal and doesn't send the second control signal to the power factor correction circuit 11; when the control circuit 15 detects that the AC input signal isn't within the preset power input threshold range and the first DC signal isn't within the preset power output threshold range, the control circuit 15 regulates the first characteristic parameter of the first control signal based on the obtained AC input signal, sends the first control signal to the power factor correction circuit 11, and doesn't send the second control signal to the power factor correction circuit 11.

In one embodiment, the first characteristic parameter of the first control signal regulated by the control circuit 15 based on the AC input signal is positively correlated with the AC input signal, i.e. when the AC input signal increases, the first characteristic parameter also increases correspondingly, while, when the AC input signal reduces, the first characteristic parameter also reduces correspondingly.

Thus it can be seen that when the AC input signal supplied by the AC power source 101 at an early state of power supply gradually increases, the first characteristic parameter, such as duty cycle of PWM signal, may increase by responding to the increase of the AC input signal, to quickly regulate the power output of the power factor correction circuit 11, i.e. the first DC signal, to the value within the preset power output threshold range, and gradually regulate the increase amplitude of power output of the power factor correction circuit 11 more stably by responding to the increase amplitude of the AC input signal, which effective avoid the peak current; in addition, when there is surge peak current in the AC input signal, the duty cycle of the PWM signal can respond to the corresponding increase of the surge peak current so as to quickly reduce the surge peak current, realize surge protection in a timely manner and avoid any damage to the circuits in a rear stage.

In one embodiment, the control circuit 15 also obtains the DC drive signal from the first power source conversion circuit 13 sent to the DC motor 102 by real-time sampling, calculates and regulates the third characteristic parameter of the third control signal based on real-time data of the DC drive signal and sends the third control signal to the first power source conversion circuit 13 to dynamically regulate the ON/OFF state of the first power source conversion circuit 13 based on the third control signal so as to ensure that the voltage and/or current and/or frequency of the DC drive signal is limited within a preset second threshold range.

Further, the control circuit 15 also obtains the AC drive signal from the second power source conversion circuit 14 sent to the AC motor 103 by real-time sampling, calculates and regulates the fourth characteristic parameter of the fourth control signal based on real-time data of the AC drive signal and sends the fourth control signal to the second power source conversion circuit 14 to dynamically regulate the ON/OFF state of the second power source conversion circuit 14 based on the fourth control signal so as to ensure that the voltage and/or current and/or frequency of the AC drive signal is limited within a preset third threshold range.

It can be understood that the second threshold range is a reasonable voltage and/or current and/or frequency range to meet the requirements for driving characteristics of the DC motor 102 and maintain energy efficiency and stability of the system. When the control circuit 15 detects that the DC drive signal is beyond the second threshold range, the control circuit 15 regulates the ON/OFF state of the first power source conversion circuit 13 based on the third control signal to regulate the DC drive signal to the value within the second threshold range.

Similarly, the third threshold range is a reasonable voltage and/or current and/or frequency range to meet the requirements for driving characteristics of the AC motor 103 and maintain energy efficiency and stability of the system. When the control circuit 15 detects that the AC drive signal is beyond the third threshold range, the control circuit 15 regulates the ON/OFF state of the second power source conversion circuit 14 based on the fourth control signal to regulate the AC drive signal to the value within the third threshold range.

Where, the control circuit 15 may regulate the AC drive signal by any of reasonable closed-loop feedback methods, such as speed loop and current loop, to ensure stable output of the second power source conversion circuit 14 and improve adaptability and reliability of drive control for motor loads.

In some embodiments, the second threshold range and the third threshold range are corresponding to a voltage threshold range with the difference between the upper limit and the lower limit of 6-12V and with optimal difference value of 10V The limit is +/-5V of preset target voltage output value of the DC drive signal and the AC drive signal. There is no relevant limitation in this application.

In some embodiments, the control circuit 15 may include any reasonable circuit unit with signal processing function, such as Digital Signal Process (DSP), Micro Controller Unit (MCU), Central Processing Unit (CPU), Single Chip Microcomputer (SCM), Field Programmable Gate Array (FPGA), Programmable Logic Device (PLD), Discrete Component Logic Gate (DCLG) or Transistor Logic Device (TLD) and Discrete Hardware (DH). There is no relevant limitation in this application.

Referring to FIG. 2, FIG. 2 illustrates a structural schematic diagram of the second embodiment of the motor power source regulation circuit in this application. The difference between the motor power source regulation circuit in the embodiment and the motor power source regulation circuit in the first embodiment in this application is that the motor power source regulation circuit 20 further includes a standby power source 26, a power input conversion circuit 27 and a power supply busbar 28.

In some embodiments, the standby power source 26, as a backup energy source, is typically designed to provide uninterrupted power during periods of main power failure or maintenance so as to maintain the continuous operation of the system and ensure service continuity. The standby power source 26 may be any of reasonable independent power sources, such as Uninterruptible Power Supply (UPS), a battery, an oil turbine generator, a PV power generator and a wind power generator. There is no relevant limitation in this application.

Specifically, the power input conversion circuit 27 is coupled with the standby power source 26, the power supply busbar 28 and the control circuit 25; the power input conversion circuit 27 receives the power input signal from the standby power source 26; the power supply busbar 28 is coupled with the power factor correction circuit 11 and the first switch sub-circuit 121.

The power input conversion circuit 27 receives the power input signal from the standby power source 26, and converts and superposes the power input signal to/with the first DC signal from the power factor correction circuit 21 to ensure stability and redundancy of power supply; the first DC signal is outputted to the power supply busbar 28 which sends the first DC signal to the first switch sub-circuit 121.

The control circuit 25 also obtains the power input signal from the power input conversion circuit 27 by sampling, and calculates and regulates the fifth characteristic parameter of the fifth control signal sent to the power input conversion circuit 27 based on the power input signal; the power input conversion circuit 27 regulates the ON/OFF state of all switch tubes and/or switch contacts based on the fifth control signal to regulate the power output of the power input conversion circuit 27, thereby regulate the first DC signal.

Where, the fifth characteristic parameter of the fifth control signal regulated by the control circuit 25 based on the power input signal is positively correlated with the power input signal, i.e. when the power input signal increases, the fifth characteristic parameter also increases correspondingly, while, when the power input signal reduces, the fifth characteristic parameter also reduces correspondingly so as to promptly and quickly regulate the first DC signal to the value within the preset first threshold range at an early state of power supply of the standby power source 26. Based on the increase amplitude of the power input signal, the control circuit 25 gradually regulates the increase amplitude of power output of the power input conversion circuit 27 to effectively avoid peak current; When there is surge peak current in the power input signal, the surge peak current can be quickly reduced so as to realize surge protection and avoid any damage to the circuits in a rear stage.

In one embodiment, the control circuit 25 also obtains the first DC signal regulated by the power factor correction circuit 21 by sampling, calculates and regulates a sixth characteristic parameter of a sixth control signal sent to the power input conversion circuit 27 based on real-time data of the regulated first DC signal; the power input conversion circuit 27 regulates the ON/OFF state of all switch tubes and/or switch contacts based on the sixth control signal to regulate the current output of the power input conversion circuit 27, thereby regulate the first DC signal.

Where, the control circuit 25 dynamically regulates the first DC signal based on the second control signal and the sixth control signal in turns so as to ensure that the voltage and/or current and/or frequency of the first DC signal is limited within the preset first threshold range to meet the driving requirements of various motor loads in different working conditions.

The control circuit 25 sends the second control signal with a higher priority than sending the sixth control signal. When the control circuit 25 detects that the first DC signal is beyond the first threshold range, firstly, the control circuit 25 sends the second control signal to the power factor correction circuit 21 to regulate the second DC signal, judges whether the first DC signal after regulation is within the first threshold range; if yes, the sixth control signal will not be sent; if no, the sixth control signal will be sent to the power input conversion circuit 27 to regulate the first DC signal again; the control circuit 25 judges whether the first DC signal after regulation is within the first threshold range; if yes, the regulation of the first DC signal is finished; if no, the control circuit 25 will send the second control signal to the power factor correction circuit 21 again to regulate the first DC signal, and the like. The control circuit 25 dynamically regulates the first DC signal based on the second control signal and the sixth control signal in turns until the first DC signal is within the first threshold range.

It should be pointed out that before sending the second control signal to the power factor correction circuit 21, the control circuit 25 also calculates and regulates the first characteristic parameter of the second control signal based on the obtained first DC signal; similarly, before sending the six control signal to the power input conversion circuit 27, the control circuit 25 also calculates and regulates the sixth characteristic parameter of the sixth control signal based on the obtained first DC signal.

Thus it can be seen that the control circuit 25 forms a closed loop control system by real-time monitoring, analysis, sending instructions and receiving feedback to ensure stable output of the first DC signal, thereby, optimizing the overall power factor correction effect and power supply stability, and improving adaptability and reliability.

In one embodiment, the control circuit 25 sends the first control signal to the power factor correction circuit 21 with a higher priority than sending the fifth control signal to the power input conversion circuit 27, i.e. when the control circuit 25 simultaneously obtains the AC input signal and the power input signal, the control circuit 25 regulates the first characteristic parameter of the first control signal based on the AC input signal, sends the first control signal to the power factor correction circuit 21, and doesn't send the fifth control signal to the power input conversion circuit 27.

In addition, the control circuit 25 sends the fifth control signal to the power input conversion circuit 27 with a higher priority than sending the sixth control signal, i.e. when the control circuit 25 simultaneously obtains the power input signal and the first DC signal, the control circuit 25 regulates the fifth characteristic parameter of the fifth control signal based on the power input signal, sends the fifth control signal to the power input conversion circuit 27 and doesn't send the sixth control signal to the power input conversion circuit 27, thereby responding to the change of the power input signal in priority and regulating the first DC signal to the value within the first threshold range in a timely manner.

Thus it can be seen that when the control circuit 25 simultaneously obtains the AC input signal, the power input signal and the first DC signal, the order of priority from high to low to send the control signal to the power factor correction circuit 21 or the power input conversion circuit 27 is as follows: the first control signal, the fifth control signal, the second control signal and the sixth control signal. Compared with only responding to the circuit output, i.e. signal feedback regulation to the first DC signal, the control circuit 25 controls the power output, i.e. the first DC signal, by utilizing circuit input, i.e. the AC input signal and the power input signal, and ensures the higher control priority of responding to the circuit input, which effectively guarantees timeliness of power conversion and stability of power supply, improves the control efficiency and guarantees the optimization of conversion efficiency of the entire power source.

In addition, because the AC power source 101 and the standby power source 26 gradually increase power output to normal value at the early stage of power supply, the drive control based on the AC input signal and the power input signal can regulate the power output more quickly and stably and realize the soft start effectively; when there is a power supply variation, especially the surge peak current, in the AC power source 101 and/or the standby power source 26, the combination of the drive control based on the circuit input and the signal feedback based on the circuit output can realize the surge protection in a timely manner to avoid any damage to circuits in a rear stage.

It is worth noting that because the multi-motor power source regulation circuit 20 involves two power sources, i.e. the AC power source 101 and the standby power source 26, during regulation and control of voltage of the first DC signal, to balance the output power of the AC power source 101 and the standby power source 26, the current of the first DC signal shall be regulated. It should be pointed out that the regulation of the first DC signal based on the first control signal, the fifth control signal, the second control signal and the sixth control signal refers to the regulation of voltage.

In one embodiment, the control circuit 25 also obtains the current of the first DC signal by sampling, i.e. the average current and the AC input signal current, calculates a first difference by subtracting the current of the AC input signal from the current of the first DC signal, and calculates and regulates a seventh characteristic parameter of a seventh control signal sent to the power factor correction circuit 21 based on the first difference; the power factor correction circuit 21 regulates the ON/OFF state of all switch tubes and/or switch contacts based on the seventh control signal to regulate the current of the first DC signal.

Further, the control circuit 25 also obtains the current of the power input signal by sampling, calculates a second difference by subtracting the current of the power input signal from the current of the first DC signal, and calculates and regulates an eighth characteristic parameter of an eighth control signal sent to the power input conversion circuit 27 based on the second difference; the power input conversion circuit 27 regulates the ON/OFF state of all switch tubes and/or switch contacts based on the eighth control signal to regulate the current of the first DC signal. Therefore, the control circuit 25 can dynamically regulate and balance the difference between the current of the AC input signal/the power input signal and the current of the first DC signal based on the difference feedback to avoid too high or too low of the AC input signal and the power input signal for the purpose of balancing the output power of the AC power source 101 and the standby power source 26.

It is worth noting that the seventh control signal and the eighth control signal may also be one or more of reasonable control signals such as PWM or PFM signals and are corresponding to one or more of reasonable parameters such as duty cycle and frequency. Compared with voltage regulation of the first DC signal based on the first control signal, the fifth control signal, the second control signal and the sixth control signal, the current regulation of the first DC signal based on the seventh control signal and the eighth control signal requires small regulation amplitude of the seventh characteristic parameter and the eighth characteristic parameter which may be neglected, i.e. the influence of current regulation of the first DC signal on voltage fluctuation is small and may be neglected.

It can be understood that control circuit 25 realizes dual optimization of busbar current by precise current difference analysis and flexible control signal regulation, i.e. on one hand, the power factor correction circuit 21 can improve the power energy quality of the entire system, and on the other hand, the power input conversion circuit 27 guarantees the stability and efficiency of current supply by precise control.

It can be understood that the isolation circuit 22, the first switch sub-circuit 221, the isolation transformer 222, the primary winding 2221, the secondary winding 2222, the first power source conversion circuit 23, the second power source conversion circuit 24 and the control circuit 25 in this embodiment are the same with the isolation circuit 12, the first switch sub-circuit 121, the isolation transformer 122, the primary winding 1221, the secondary winding 1222, the first power source conversion circuit 13, the second power source conversion circuit 14 and the control circuit 15 in FIG. 1 respectively. Refer to FIG. 1 and relevant text. No more description is made herein.

Referring to FIG. 3, FIG. 3 illustrates a structural schematic diagram of the third embodiment of the motor power source regulation circuit in this application. The difference between the motor power source regulation circuit in the embodiment and the motor power source regulation circuit in the first embodiment in this application is that the second power source conversion circuit 34 in the motor power source regulation circuit 30 also includes a second switch sub-circuit 341 and an inverter circuit 342.

Where, the second switch sub-circuit 341 is coupled with one piece of secondary winding 3222 and the inverter circuit 342 which is for coupling with the AC motor 103.

The second switch sub-circuit 341 receives the second AC signal from the secondary winding 3222 and the second drive signal from the control circuit 35, and regulates the ON/OFF state of all switch tubes and/or switch contacts based on the second drive signal to convert the second AC signal to the second DC signal.

The inverter circuit 342 receives the second DC signal from the second switch sub-circuit 341 and the fourth control signal from the control circuit 35 and regulates the ON/OFF state of all switch tubes and/or switch contacts based on the fourth control signal to convert the second DC signal to the AC drive signal and supply the AC drive signal to the AC motor 103.

Thus it can be seen that DC output of the power factor correction circuit 31 is used as the inputted busbar voltage of the isolation transformer 322 in the isolation circuit 32 in a rear stage. The rear stage realizes controllable transformation of output voltage and frequency by controlling the first power source conversion circuit 33 to drive the DC motor 102. The isolation transformer 322 can realize electrical isolation and voltage matching. The first power source conversion circuit 33 in a rear stage can realize adjustable output of the DC drive signal and can achieve the purpose of variable frequency drive of motor loads in a rear stage.

Similarly, DC output of the power factor correction circuit 31 is used as the inputted busbar voltage of the isolation transformer 322 in a rear stage. The rear stage realizes controllable transformation of output voltage and frequency by controlling the second power source conversion circuit 34 to drive the AC motor 103. The isolation transformer 322 can realize electrical isolation and voltage matching. The second power source conversion circuit 34 in a rear stage can realize adjustable output of the AC drive signal and can achieve the purpose of variable frequency drive of motor loads in a rear stage.

From the perspective of control strategies, the control circuit 35 dynamically regulates the first DC signal from the power factor correction circuit 31 and the DC drive signal from the first power source conversion circuit 33 and/or the AC drive signal from the second power source conversion circuit 34 based on the real-time output power demand, load voltage, frequency demand and output characteristic curve of the DC motor 102 and/or the AC motor 103 to ensure highest conversion efficiency of the first power source conversion circuit 33 and/or the second power source conversion circuit 34 and optimal control strategy of the system and to realize efficient variable drive and high dynamic regulation.

In some embodiments, within a wide range of the AC voltage input, in application scenarios with high requirements for AC input and insulation in electrical safety regulations, such as medical motor drive applications, the isolation transformer 322 in the isolation circuit 32 realizes electrical isolation and voltage matching of primary and secondary edge in accordance with safety regulations to meet the insulation requirements of primary and secondary edges in electrical safety regulations. The first power source conversion circuit 33 and/or the second power source conversion circuit 34 in a rear stage drive(s) the motor by controlling power output, i.e. voltage, current and frequency of the DC drive signal. In general, common motor drive control strategies are SVPWM, SPWM, DTC, FOC, etc. The control circuit 35 may regulate and control the current, voltage and frequency of the DC drive signal and/or the AC drive signal by any of above control strategies to meet the drive demand of the DC motor 102 and/or the AC motor 103 in different working conditions so as to realize the efficient speed regulation and control of motors.

For example, when the voltage of the AC input signal from the AC power source 101 is 90Vac, to ensure efficient work of the motor power source regulation circuit 30, the power factor correction circuit 31 may set 370Vdc as the target voltage output value; the first power source conversion circuit 33 and/or the second power source conversion circuit 34 in a rear stage are/is stably controlled in a closed loop to ensure stable work of motors with different loads and guarantee that the first power source conversion circuit 33 and/or the second power source conversion circuit 34 in a rear stage can output the conforming voltage, current and frequency waveform.

When the voltage of the AC input signal is increasing from 90Vac to 220Vac, the control circuit 35 can respond to the change of the AC input signal and gradually increase the duty cycle of the first control signal sent to the power factor correction circuit 31 to slowly increase the power output of the power factor correction circuit 31, i.e. the first DC signal, to 390Vdc. The first power source conversion circuit 33 and/or the second power source conversion circuit 34 in a rear stage are/is controlled in a closed loop to ensure stable work of motors with different loads and guarantee to output the conforming voltage, current and frequency waveform.

However, in other embodiments, the AC power source 101 may also gradually increase the voltage of the AC input signal from 220Vac to 264Vac and gradually increase the duty cycle of the first control signal, to slowly increase the voltage of the first DC signal from 390Vdc to 410Vdc. 5Vdc voltage return difference may be set to ensure stable and reliable drive control and meet the requirement for robustness.

Thus it can be seen that to ensure stable and reliable work of the motor power source regulation circuit 30, based on different voltage ranges of the AC input signal, the target voltage output value is 370Vdc when the input AC voltage is 90Vac. The closed loop output is set for the first power source conversion circuit 33 and/or the second power source conversion circuit 34 in a rear stage to ensure the stable output of voltage, current and frequency waveform that meets the requirements in all load conditions to ensure stable and reliable work of the DC motor 102 and/or the AC motor 103.

In another embodiment, the target voltage input value of the AC input signal may be any reasonable voltage within 90-264Vac, while the target voltage output value of the power factor correction circuit 31 may be any reasonable voltage within 370-410Vdc. The specific value is subject to the practical application scenarios and power supply standards of different countries. There is no relevant limitation in this application.

In another embodiment, due to regularity and predictability of drive control of the DC motor 102 and/or the AC motor 103, the control circuit 35 may also include an Artificial Intelligence (AI) control mechanism. Cloud or client AI artificial intelligence control can optimize the control strategy of the control circuit 35 so as to meet the real-time demand of adaptive loads. For example, the control circuit 35 may integrate with AI chips and/or deep network learning models and/or AI algorithm network learning models to obtain one or more signals among the AC input signal, the first DC signal, the DC drive signal, the first AC signal, the second AC signal, the second DC signal, the AC drive signal, the second AC signal, the third AC signal and the third DC signal and/or one or more values among current ambient temperature, operation duration of the motor power source regulation circuit 30, and operation duration of the DC motor 102 and/or the AC motor 103 by sampling for the purpose of optimizing the regulation, control and sending of one or more signals among the first control signal, the second control signal, the first drive signal and the second drive signal by AI control.

In above scheme, many circuits are integrated in one module and one control circuit 35 can control the power factor correction circuit 31, the first power source conversion circuit 33 and the second power source conversion circuit 34, which effectively simplifies the system hardware circuits, reduces the realization costs, and improves the reliability and efficiency of drive control. In addition, the scheme can realize more accurate output timing logic control by timing control.

The control circuit 35 can dynamically regulate the first DC signal based on the demand of the DC motor 102 and the AC motor 103 on power voltage, current and frequency to reach the optimal working point under the premise of meeting the output power demand and by balancing the stability and optimal efficiency to ensure higher power supply efficiency of the entire system.

For application scenarios with higher requirements in safety regulations, from the perspective of the control strategies, based on the real-time output power demand of the DC motor 102 and the voltage and frequency demands of loads, by reference of the output characteristic curve, the control circuit 35 dynamically regulates the second DC signal from the isolation transformer 322 to ensure highest efficiency and most optimal control strategy of the isolation transformer 322 and the first power source conversion circuit 33 in a rear stage, and realizes efficient variable drive and high dynamic regulation; similarly, based on the real-time output power demand of the AC motor 103 and the voltage and frequency demands of loads, by reference of the output characteristic curve, the control circuit 35 dynamically regulates the third DC signal from the isolation transformer 322 to ensure highest efficiency and most optimal control strategy of the isolation transformer 322 and the second power source conversion circuit 34 in a rear stage and realizes efficient variable drive and high dynamic regulation.

For application scenarios with low requirements in safety regulations, from the perspective of the control strategies, based on the real-time output power demand of the DC motor 102 and/or AC motor103, the voltage and frequency demands of loads, by reference of the output characteristic curve, the control circuit 35 dynamically regulates the first DC signal from the power factor correction circuit 31 to ensure highest efficiency and most optimal control strategy of the first power source conversion circuit 33 and/or the second power source conversion circuit 34 in a rear stage, and realizes efficient variable drive and high dynamic regulation.

The control circuit 35 may realize all control strategies by utilizing one MCU to effectively improve the low reliability and synchronism caused by signal delay in linkage control of modules for communication and improve the reliability of the system control.

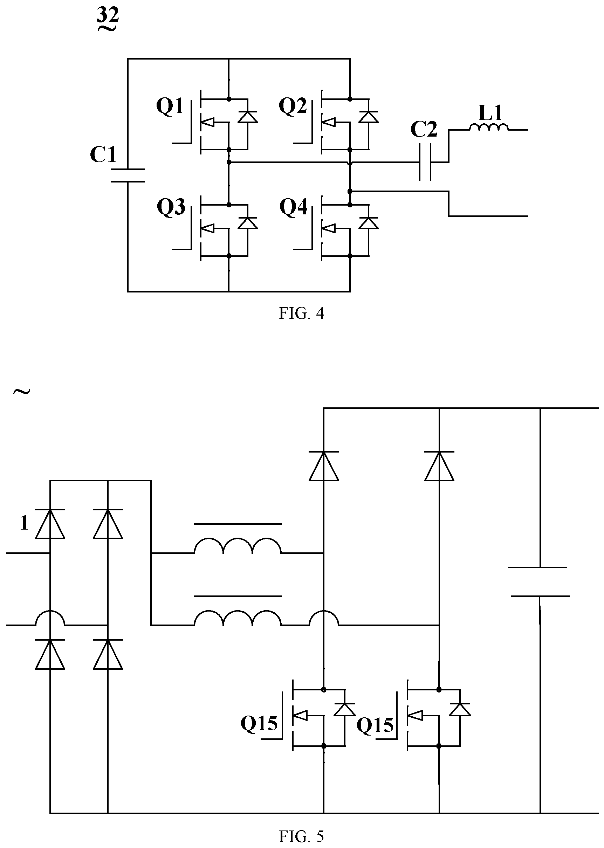

Referring to FIG. 4, FIG. 4 illustrates a structural schematic diagram of an embodiment of the first switch sub-circuit in the motor power source regulation circuit in FIG. 3.

In one embodiment, the first switch sub-circuit 321 may include a first capacitor C1, a first switch tube Q1, a second switch tube Q2, a third switch tube Q3, a fourth switch tube Q4, a second capacitor C2 and a first inductor L1.

Where, the first end of the first capacitor C1 is coupled with the first end of the power factor correction circuit 31, the first end of the first switch tube Q1 and the first end of the second switch tube Q2; the second end of the first capacitor C1 is coupled with the second end of the power factor correction circuit 31, the second end of the third switch tube Q3 and the second end of the fourth switch tube Q4; the second end of the first switch tube Q1 is coupled with the first end of the third switch tube Q3 and the first end of the second capacitor C2; the second end of the second switch tube Q2 is coupled with the first end of the fourth switch tube Q4 and the second end of the primary winding 3221; the second end of the second capacitor C2 is coupled with the first end of the first inductor L1; the second end of the first inductor L1 is coupled with the first end of the primary winding 3221.

However, in other embodiments, the second capacitor C2 may be replaced by an electrical connection line, i.e. remove the second capacitor C2 from the first switch sub-circuit 321. The specific situation depends on the practical application scenario. There is no relevant limitation in this application.

It can be understood that the third ends of the first switch tube Q1, the second switch tube Q2, the third switch tube Q3 and the fourth switch tube Q4 are coupled with the control circuit 35 to receive the first drive signal from the control circuit 35, and trigger the ON/OFF state based on the first drive signal to realize the corresponding signal conversion.

In some embodiments, the first switch tube Q1, the second switch tube Q2, the third switch tube Q3, the fourth switch tube Q4 and "switch tubes" mentioned below may be one or more combinations of reasonable switch devices, such as Metal Oxide Semiconductor Field Effect Transistor (MOS), transistor, thyristor and Insulate Gate Bipolar Transistor (IGBT). The third ends of all switch tubes are corresponding to the control ends to switch ON the first end and the second end when the third ends of all switch tubes receive the corresponding drive signals. There is no relevant limitation in this application.

Referring to FIG. 5, FIG. 5 illustrates a structural schematic diagram of the first embodiment of the power factor correction circuit in the motor power source regulation circuit in FIG. 3.

In one embodiment, the power factor correction circuit 31 may also include a first diode D1, a second diode D2, a third diode D3, a fourth diode D4, a fifth inductor L5, a sixth inductor L6, a fifth diode D5, a sixth diode D6, a fifteenth switch tube Q15, a sixteenth switch tube Q16 and a sixth capacitor C6.

Where, the first end of the first diode D1 is coupled with the second end of the third diode D3 and the first end of the AC power source 101; the second end of the first diode D1 is coupled with the second end of the second diode D2, the first end of the fifth inductor L5 and the first end of the sixth inductor L6; the first end of the second diode D2 is coupled with the second end of the fourth diode D4 and the second end of the AC power source 101; the first end of the third diode D3 is coupled with the first end of the fourth diode D4, the second end of the fifteenth switch tube Q15, the second end of the sixteenth switch tube Q16 and the second end of the sixth capacitor C6; the second end of the fifth inductor L5 is coupled with the first end of the fifth diode D5 and the first end of the fifteenth switch tube Q15; the second end of the sixth inductor L6 is coupled with the first end of the sixth diode D6 and the first end of the sixteenth switch tube Q16; the second end of the fifth diode D5 is coupled with the second end of the sixth diode D6 and the first end of the sixth capacitor C6.

It can be understood that the third end of the fifteenth switch tube Q15 and the third end of the sixteenth switch tube Q16 are coupled with the control circuit 35 to receive the first control signal and/or the second control signal from the control circuit 35 and trigger the ON/OFF state based on the first control signal and/or the second control signal to regulate the first DC signal.

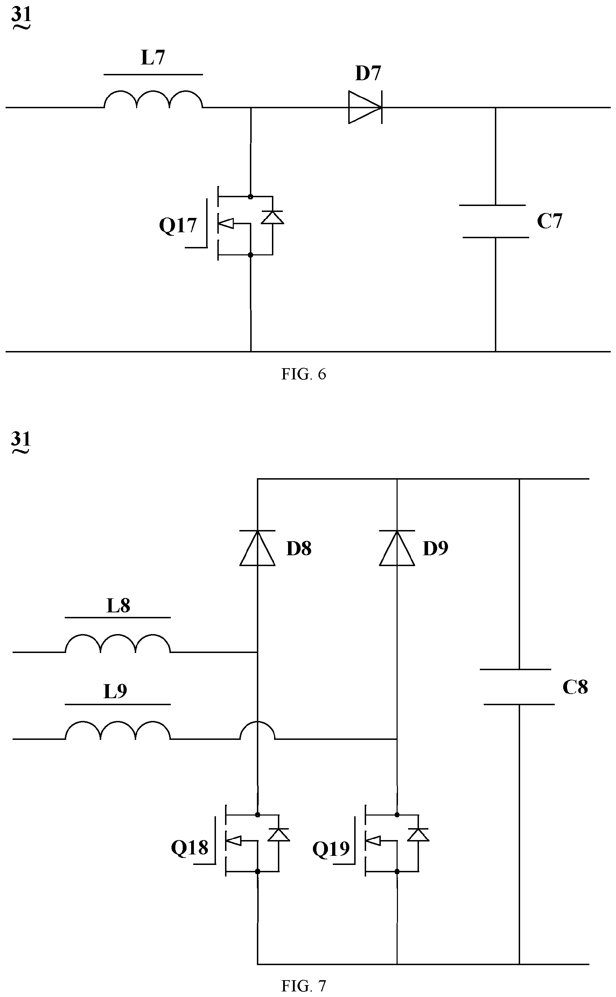

Referring to FIG. 6, FIG. 6 illustrates a structural schematic diagram of the second embodiment of the power factor correction circuit in the motor power source regulation circuit in FIG. 3.

In one embodiment, the power factor correction circuit 31 may include a seventh inductor L7, a seventeenth switch tube Q17, a seventh diode D7 and a seventh capacitor C7; the first end of the seventh inductor L7 is coupled with the first end of the AC power source 101; the second end of the seventh inductor L7 is coupled with the first end of the seventeenth switch tube Q17 and the first end of the seventh diode D7; the second end of the seventh diode D7 is coupled with the first end of the seventh capacitor C7; the second end of the seventeenth switch tube Q17 is coupled with the second end of the AC power source 101 and the second end of the seventh capacitor C7.

Where, the third end of the seventeenth switch tube Q17 is coupled with the control circuit 35 to receive the first control signal from the control circuit 35 and trigger the ON/OFF state based on the first control signal to regulate the first DC signal.

Referring to FIG. 7, FIG. 7 illustrates a structural schematic diagram of the third embodiment of the power factor correction circuit in the motor power source regulation circuit in FIG. 3.

In another embodiment, the power factor correction circuit 31 may include an eighth inductor L8, a ninth inductor L9, an eighth diode D8, a ninth diode D9, an eighteenth switch tube Q18, a nineteenth switch tube Q19 and an eighth capacitor C8; the first end of the eighth inductor L8 is coupled with the first end of the AC power source 101; the second end of the eighth inductor L8 is coupled with the first end of the eighth diode D8 and the first end of the eighteenth switch tube Q18; the first end of the ninth inductor L9 is coupled with the second end of the AC power source 101; the second end of the ninth inductor L9 is coupled with the first end of the ninth diode D9 and the first end of the nineteenth switch tube Q19; the second end of the eighth diode D8 is coupled with the second end of the ninth diode D9 and the first end of the eighth capacitor C8; the second end of the eighteenth switch tube Q18 is coupled with the second end of the nineteenth switch tube Q19 and the second end of the eighth capacitor C8.

Where, the third end of the eighteenth switch tube Q18 and the third end of the nineteenth switch tube Q19 are coupled with the control circuit 35 to receive the first control signal from the control circuit 35 and trigger the ON/OFF state based on the first control signal to regulate the first DC signal.

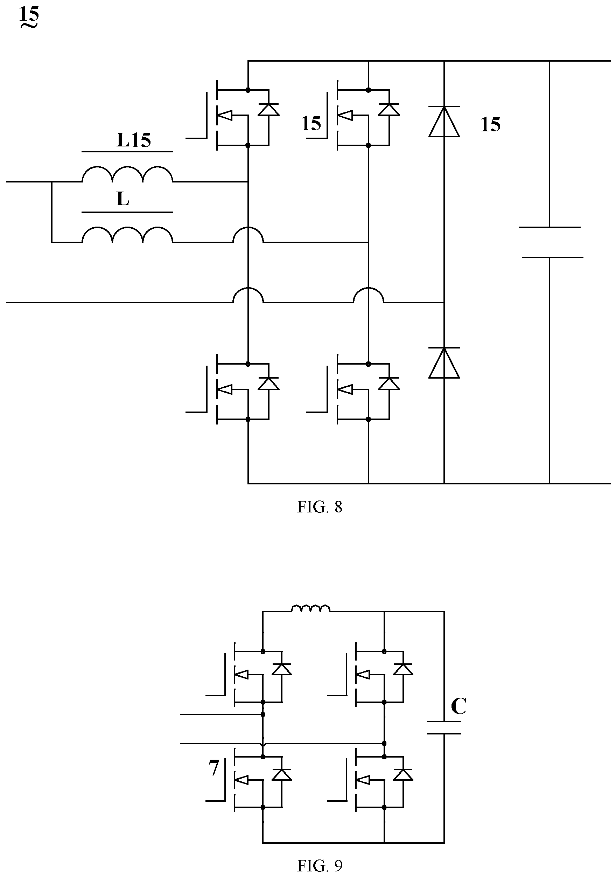

Referring to FIG. 8, FIG. 8 illustrates a structural schematic diagram of the fourth embodiment of the power factor correction circuit in the motor power source regulation circuit in FIG. 3.

In another embodiment, the power factor correction circuit 31 may also include a tenth inductor L10, an eleventh inductor L11, a twentieth switch tube Q20, a twenty-first switch tube Q21, a twenty-second switch tube Q22, a twenty-third switch tube Q23, a tenth diode D10, an eleventh diode D11 and a ninth capacitor C9; the first end of the tenth inductor L10 is coupled with the first end of the eleventh inductor L11 and the first end of the AC power source 101; the second end of the tenth inductor L10 is coupled with the second end of the twentieth switch tube Q20 and the first end of the twenty-second switch tube Q22; the second end of the eleventh inductor L11 is coupled with the second end of the twenty-first switch tube Q21 and the first end of the twenty-third switch tube Q23; the first end of the tenth diode D10 is coupled with the second end of the eleventh diode D11 and the second end of the AC power source 101; the first end of the twentieth switch tube Q20 is coupled with the first end of the twenty-first switch tube Q21, the second end of the tenth diode D10 and the first end of the ninth capacitor C9; the second end of the twenty-second switch tube Q22 is coupled with the second end of the twenty-third switch tube Q23, the first end of the eleventh diode D11 and the second end of the ninth capacitor C9.

Where, the third end of the twenty-second switch tube Q22 and the third end of the twenty-third switch tube Q23 are coupled with the control circuit 35 to receive the first control signal from the control circuit 35 and trigger the ON/OFF state based on the first control signal to regulate the first DC signal.

It can be understood that the power factor correction circuit 31 is described based on single-phase power factor correction. When the AC power source 101 has three-phase AC input, the power factor correction circuit 31 may be any reasonable circuit, such as single boost circuit, double boost circuit, triple boost circuit and three-phase Vienna circuit. The specific situation depends on the practical application scenario. There is no relevant limitation in this application.

Referring to FIG. 9, FIG. 9 illustrates a structural schematic diagram of an embodiment of the second switch sub-circuit in the motor power source regulation circuit in FIG. 3.

In one embodiment, the second switch sub-circuit 341 includes a fifth switch tube Q5, a sixth switch tube Q6, a seventh switch tube Q7, an eighth switch tube Q8, a second inductor L2 and a third capacitor C3.

Where, the second end of the fifth switch tube Q5 is coupled with the third end of the primary winding 3221 and the first end of the seventh switch tube Q7; the second end of the sixth switch tube Q6 is coupled with the fourth end of the primary winding 3221 and the first end of the eighth switch tube Q8; the first end of the fifth switch tube Q5 is coupled with the first end of the second inductor L2; the second end of the second inductor L2 is coupled with the first end of the sixth switch tube Q6, the first end of the third capacitor C3 and the first end of the first power source conversion circuit 33; the second end of the seventh switch tube Q7 is coupled with the second of the eighth switch tube Q8, the second end of the third capacitor C3 and the second end of the first power source conversion circuit 33.

However, in other embodiments, the second inductor L2 may be replaced by an electrical connection line, i.e. remove the second inductor L2 from the second switch sub-circuit 341. The specific situation depends on the practical application scenario. There is no relevant limitation in this application.

It can be understood that the third ends of the fifth switch tube Q5, the sixth switch tube Q6, the seventh switch tube Q7 and the eighth switch tube Q8 are coupled with the control circuit 35 to receive the second drive signal from the control circuit 35 and trigger the ON/OFF state based on the second drive signal to realize the corresponding signal conversion.

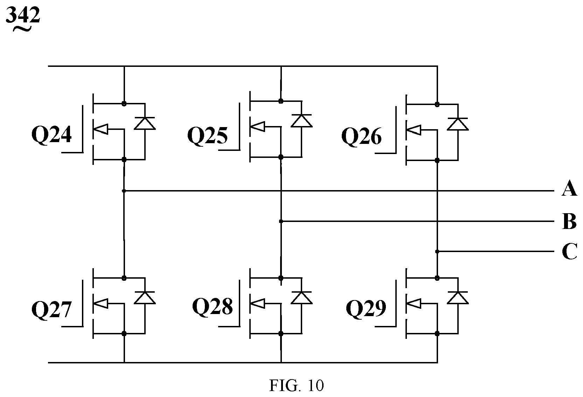

Referring to FIG. 10, FIG. 10 illustrates a structural schematic diagram of an embodiment of the inverter circuit in the motor power source regulation circuit in FIG. 3.

In one embodiment, the inverter circuit 342 may include a twenty-fourth switch tube Q24, a twenty-fifth switch tube Q25, a twenty-sixth switch tube Q26, a twenty-seventy switch tube Q27, a twenty-eighth switch tube Q28 and a twenty-ninth switch tube Q29; the first end of the twenty-fourth switch tube Q24 is coupled with the first end of the twenty-fifth switch tube Q25 and the first end of the twenty-sixth switch tube Q26; the second end of the twenty-seventy switch tube Q27 is coupled with the second end of the twenty-eighth switch tube Q28 and the second end of the twenty-ninth switch tube Q29; the second end of the twenty-fourth switch tube Q24 is coupled with the first end of the twenty-seventy switch tube Q27 and the first end of the AC motor 103; the second end of the twenty-fifth switch tube Q25 is coupled with the first end of the twenty-eighth switch tube Q28 and the second end of the AC motor 103; the second end of the twenty-sixth switch tube Q26 is coupled with the first end of the twenty-ninth switch tube Q29 and the third end of the AC motor 103.

Where, the third ends of the twenty-fourth switch tube Q24, the twenty-fifth switch tube Q25, the twenty-sixth switch tube Q26, the twenty-seventy switch tube Q27, the twenty-eighth switch tube Q28 and the twenty-ninth switch tube Q29 are coupled with the control circuit 35 to receive the third control signal from the control circuit 35 and trigger the ON/OFF state based on the third control signal to realize the corresponding signal conversion.

In addition, the AC motor 103 is a three-phase motor and the first end, the second end and the third end of the AC motor 103 are corresponding to phase A, B and C of the three-phase motor correspondingly.

It can be understood that the inverter circuit 342 is an end output circuit for the AC motor 103 which is a three-phase motor. When the AC motor 103 is a single-phase motor, the inverter circuit 342 may be a reasonable power output circuit, such as a bridge circuit formed by four switch tubes or an ON/Off circuit formed by single switch tube. The specific situation depends on the practical application scenario. There is no relevant limitation in this application.

It can be understood that the isolation transformer 322, the primary winding 3221 and the secondary winding 3222 in this embodiment are same with the isolation transformer 122, the primary winding 1221 and the secondary winding 1222 in FIG. 1. Refer to FIG. 1 and relevant text. No more description is made herein.

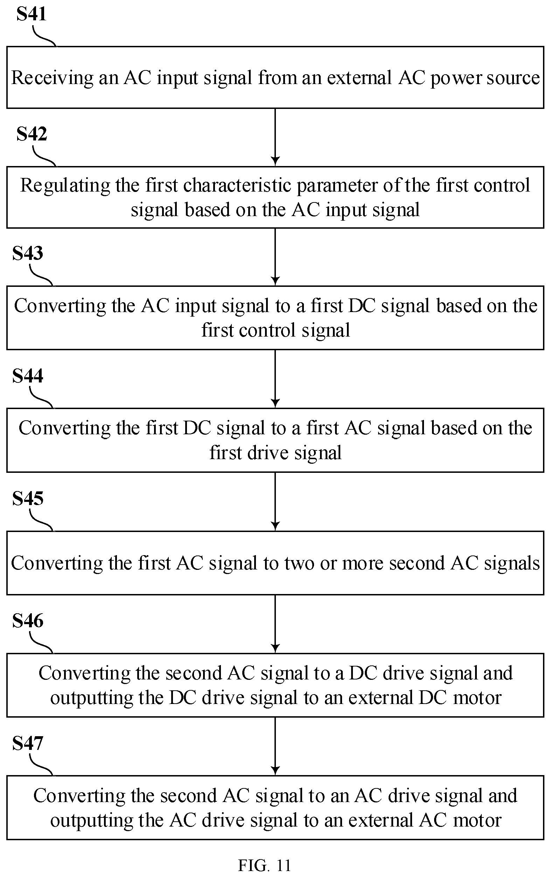

The embodiments in this application provide a motor power source control method. Referring to FIG. 11, FIG. 11 illustrates a flow chart of the first embodiment of the motor power source control method in this application. Specifically, the method may include the following steps:
S41: receiving an AC input signal from an external AC power source.

It can be understood that the motor power source control method in this embodiment is a method that the motor power source regulation circuit controls the power supply for multiple motor loads by utilizing the AC power source. Where, the motor power source regulation circuit includes a power factor correction circuit, an isolation circuit, a first power source conversion circuit (s), a second power source conversion circuit (s) and a control circuit. The isolation circuit includes a first switch sub-circuit and an isolation transformer. The isolation transformer includes a piece of primary winding and two or more pieces of secondary winding coupled with the primary winding. The power factor correction circuit is for coupling with the AC power source. The first switch sub-circuit is coupled with the power factor correction circuit and the primary winding. Every first power source conversion circuit is coupled with one piece of the secondary winding and is for coupling with a DC motor. Every second power source conversion circuit is coupled with one piece of the secondary winding and is for coupling with an AC motor. The control circuit is coupled with the power factor correction circuit, the first switch sub-circuit, every first power source conversion circuit and every second power source conversion circuit.

It is worth noting that the AC power source may be understood as AC power supply of grids or a power regulation circuit which converts and regulates the grid power to obtain AC power output.

Specifically, the power factor correction circuit receives an AC input signal from an external AC power source.

S42: regulating the first characteristic parameter of the first control signal based on the AC input signal.

The control circuit samples and analyzes the AC input signal in the power factor correction circuit and dynamically regulates the first characteristic parameter of the first control signal sent to the power factor correction circuit based on the AC input signal.

In some embodiments, the first control signal may be one or more reasonable control signal(s), such as PWM or PFM signals. There is no relevant limitation in this application.

In some embodiments, the first characteristic parameter may be one or more reasonable parameters, such as duty cycle or frequency. There is no relevant limitation in this application.

S43: converting the AC input signal to a first DC signal based on the first control signal.

Where, the power factor correction circuit also receives the first control signal from the control circuit, regulates the ON/OFF state of all switch tubes and/or switch contacts based on the first control signal to convert the AC input signal to a first DC signal, and dynamically regulates the first DC signal by responding to the real-time change of the AC input signal.

S44: converting the first DC signal to a first AC signal based on the first drive signal.

Further, every first switch sub-circuit receives the first DC signal from the power factor correction circuit and the first drive signal from the control circuit, converts the first DC signal to a first AC signal based on timing control of the first drive signal and generates required AC waveform by accurate switch control.

S45: converting the first AC signal to two or more second AC signals.

Further, the primary winding of the isolation transformer receives the first AC signal from the first switch sub-circuit and converts the first AC signal to two or more second AC signals by two or more pieces of the secondary winding by electromagnetic induction. This design allows for efficient energy transfer while achieving electrical isolation, improving the safety and stability of the system.

S46: converting the second AC signal to a DC drive signal and outputting the DC drive signal to an external DC motor.

The second AC signal from every piece of secondary winding will be received by a corresponding first power source conversion circuit. The first power source conversion circuit converts the second AC signal to the DC drive signal and sends the DC drive signal to the DC motor. This conversion often covers the rectification and filtration process to ensure the stability and applicability of outputting DC signals.

S47: converting the second AC signal to an AC drive signal and outputting the AC drive signal to an external AC motor.

Besides, the second AC signal of other pieces of the secondary winding will be received by corresponding second power source conversion circuits. These second power source conversion circuits convert the second AC signal to the AC drive signal and sends the AC drive signal to AC motor. This conversion may involve an inversion process to generate the AC power that meets the requirements of the AC motor.

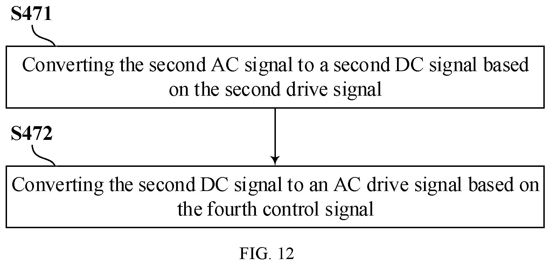

Referring to FIG. 12, FIG. 12 illustrates a flow chart of an embodiment of S47 in FIG. 11. In one embodiment, the power control method in this application includes S41-S47 and further includes some more specific steps. Specifically, S47 may include the following steps:
S471: converting the second AC signal to a second DC signal based on the second drive signal.

Specifically, the second power source conversion circuit in the motor power source regulation circuit also includes a second switch sub-circuit and an inverter circuit. The second switch sub-circuit is coupled with one piece of secondary winding and the inverter circuit which is for coupling with the AC motor.

Where, the second switch sub-circuit receives the second AC signal from the secondary winding and the second drive signal from the control circuit, regulates the ON/OFF state of all switch tubes and/or switch contacts based on the second drive signal and converts the second AC signal to a second DC signal.

S472: converting the second DC signal to an AC drive signal based on the fourth control signal.

The inverter circuit receives the second DC signal from the second switch sub-circuit and the fourth control signal from the control circuit, regulates the ON/OFF state of all switch tubes and/or switch contacts based on the fourth control signal, converts the second DC signal to an AC drive signal and sends the AC drive signal to the AC motor.

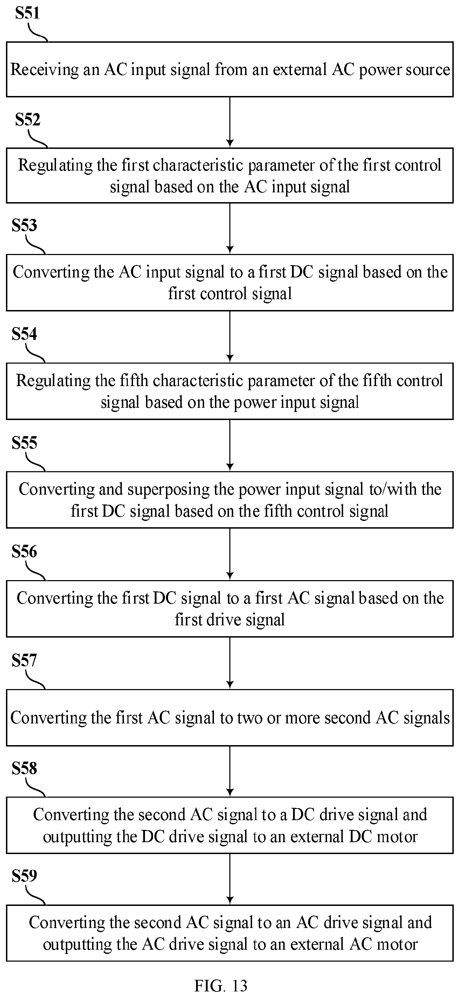

Referring to FIG. 13, FIG. 13 illustrates a flow chart of the second embodiment of the motor power source control method in this application. The motor power source control method in this embodiment is a flow chart of a detailed motor power source control method in FIG. 11. This method includes the following steps:
S51: receiving an AC input signal from an external AC power source.
S52: regulating the first characteristic parameter of the first control signal based on the AC input signal.
S53: converting the AC input signal to a first DC signal based on the first control signal.

Where, S51, S52 and S53 are same with S41, S42 and S43 in FIG. 11. Refer to S41, S42, S43 and relevant text. No more description is made herein.

S54: regulating the fifth characteristic parameter of the fifth control signal based on the power input signal.

Specifically, the motor power source regulation circuit further includes a standby power source, a power input conversion circuit and a power supply busbar. The power input conversion circuit is coupled with the standby power source, the power supply busbar and the control circuit. The power input conversion circuit receives the power input signal from the standby power source. The power supply busbar is coupled with the power factor correction circuit and the first switch sub-circuit.

Where, the power input conversion circuit receives the power input signal from the standby power source; the control circuit obtains the power input signal from the power input conversion circuit by sampling and calculates and regulates the fifth characteristic parameter of the fifth control signal sent to the power input conversion circuit based on the power input signal.

S55: converting and superposing the power input signal to/with the first DC signal based on the fifth control signal.

The power input conversion circuit regulates the ON/OFF state of all switch tubes and/or switch contacts based on the fifth control signal, converts and superposes the power input signal to/with the first DC signal from the power factor correction circuit to ensure stability and redundancy of power supply and outputs the first DC signal to the power supply busbar which sends the first DC signal to the first switch sub-circuit.

S56: converting the first DC signal to a first AC signal based on the first drive signal.

S57: converting the first AC signal to two or more second AC signals.

S58: converting the second AC signal to a DC drive signal and outputting the DC drive signal to an external DC motor.

S59: converting the second AC signal to an AC drive signal and outputting the AC drive signal to an external AC motor.

Where, S56, S57, S58 and S59 are same with S44, S45, S46 and S47 in FIG. 11. Refer to S44, S45, S46, S47 and relevant text. No more description is made herein.

It can be understood that in some other embodiments, the motor power source regulation circuit also includes other more specific circuit units to match with other more specific motor power source control methods. Refer to FIG. 1 to FIG. 10 and relevant text. No more description is made herein.

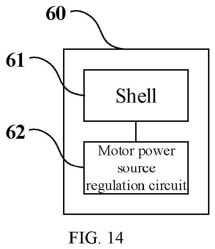

The embodiments in this application also provide an electronic device. Refer to FIG. 14, FIG. 14 illustrates a framework diagram of an embodiment of the electronic device in this application. In this embodiment, the electronic device 60 includes a shell 61 and a motor power source regulation circuit 62 connected to the shell 61.

In some embodiments, the electronic device 60 may be a power supply device for any reasonable mechanical equipment integrated with motors such as medical motor equipment or industrial manufacturing equipment. There is no relevant limitation in this application.

It should be noted that the motor power source regulation circuit 62 in this embodiment is a motor power source regulation circuit 10, a motor power source regulation circuit 20 or a motor power source regulation circuit 30 in above embodiments. Refer to FIG. 1 to FIG. 10 and relevant text. No more description is made herein.

The beneficial effects of this application are as follows: different from prior art, the power factor correction circuit in the motor power source regulation circuit receives the first control signal from the control circuit and regulates the AC input signal to the first DC signal based on the first control signal; every first switch sub-circuit receives the first DC signal from the power factor correction circuit and the first drive signal from the control circuit and converts the first DC signal to the first AC signal based on the first drive signal; the primary winding receives the first AC signal from the first switch sub-circuit and converts the first AC signal to two or more second AC signals by utilizing two or more pieces of the secondary winding; every first power source conversion circuit receives the second AC signal from every secondary winding, converts the second AC signal to the DC drive signal and outputs the DC drive signal to the DC motor; every second power source conversion circuit receives the second AC signal from every secondary winding, converts the second AC signal to the AC drive signal and outputs the AC drive signal to the AC motor. Therefore, many circuits are integrated in one module and one control circuit can control the power factor correction circuit, the first power source conversion circuit and the second power source conversion circuit, which effectively simplifies the system hardware circuits and improves the reliability and efficiency of drive control. Furthermore, compared with responding to signal feedback regulation to motor loads, the drive control by responding to the AC input signal from the AC power source effectively ensures the control timeliness, improves the control efficiency and guarantees the optimization of the entire motor drive conversion efficiency. In addition, compared with an independent isolation transformer in every motor load, the multi-winding transformer further enhances the integration of motor power source regulation circuits and simplifies the drive control of control circuits. Besides, the isolation transformer can realize the electric isolation and voltage matching of primary and secondary edges according to safety regulations to meet the insulation requirements for primary and secondary edges in electrical safety regulations.

The above content is only the embodiments in this application and constitutes no limitation to the scope of the patent in this application. Any equivalent structure or equivalent process transformation made by reference of the specification and the drawings in this application, or direct or indirect application in other related technical fields are included in the protection scope of the patent of this application.

## Claims

1. A motor power source regulation circuit, wherein, the motor power source regulation circuit comprises:
a power factor correction circuit for coupling with an AC power source to receive an AC input signal from the AC power source and convert the AC input signal to a first DC signal;
an isolation circuit which comprises a first switch sub-circuit and an isolation transformer, of which the isolation transformer comprises one piece of primary winding and two or more pieces of secondary winding coupled with the primary winding and the first switch sub-circuit is coupled with the power factor correction circuit and the primary winding;
a first power source conversion circuit (s) of which every first power source conversion circuit is coupled with one piece of the secondary winding and for coupling with a DC motor;
a second power source conversion circuit (s) of which every second power source conversion circuit is coupled with one piece of the secondary winding and for coupling with an AC motor;
a control circuit coupled with the power factor correction circuit, the first switch sub-circuit, every first power source conversion circuit and every second power source conversion circuit to obtain the AC input signal by sampling and to regulate a first characteristic parameter of a first control signal based on the AC input signal;
where, the power factor correction circuit receives the first control signal from the control circuit and regulates the AC input signal to the first DC signal based on the first control signal; every first switch sub-circuit receives the first DC signal from the power factor correction circuit and a first drive signal from the control circuit and converts the first DC signal to a first AC signal based on the first drive signal; the primary winding receives the first AC signal from the first switch sub-circuit and converts the first AC signal to two or more second AC signals by utilizing two or more pieces of the secondary winding; every first power source conversion circuit receives the second AC signal from every secondary winding, converts the second AC signal to a DC drive signal and outputs the DC drive signal to the DC motor; every second power source conversion circuit receives the second AC signal from every secondary winding, converts the second AC signal to an AC drive signal and outputs the AC drive signal to the AC motor.

2. The motor power source regulation circuit according to claim 1, wherein,
the control circuit obtains the first DC signal by sampling, regulates a second characteristic parameter of a second control signal based on the first DC signal and sends the second control signal to the power factor correction circuit which limits the first DC signal within a first threshold range based on the second control signal; where, the first characteristic parameter is positively correlated with the AC input signal, and the power factor correction circuit responds to the first control signal with a higher priority than responding to the second control signal;
the control circuit obtains the DC drive signal by sampling, regulates a third characteristic parameter of a third control signal based on the DC drive signal, and sends the third control signal to the first power source conversion circuit which limits the DC drive signal within a second threshold range based on the third control signal;
the control circuit obtains the AC drive signal by sampling, regulates a fourth characteristic parameter of a fourth control signal based on the AC drive signal and sends the fourth control signal to the second power source conversion circuit which limits the AC drive signal within a third threshold range based on the fourth control signal.

3. The motor power source regulation circuit according to claim 2, wherein,
the motor power source regulation circuit also comprises a standby power source, a power input conversion circuit and a power supply busbar; the power input conversion circuit is coupled with the standby power source, the power supply busbar and the control circuit; the power supply busbar is coupled with the power factor correction circuit and the first switch sub-circuit; the power input conversion circuit receives a power input signal from the standby power source, converts and superposes the power input signal to/with the first DC signal, and outputs the first DC signal to the power supply busbar which sends the first DC signal to the first switch sub-circuit;
the control circuit obtains the power input signal by sampling, regulates a fifth characteristic parameter of a fifth control signal based on the power input signal and sends the fifth control signal to the power input conversion circuit which regulates the first DC signal based on the fifth control signal; where, the fifth characteristic parameter is positively correlated with the power input signal.

4. The motor power source regulation circuit according to claim 2, wherein,
the second power source conversion circuit also comprises a second switch sub-circuit and an inverter circuit;
the second switch sub-circuit is coupled with the secondary winding and the inverter circuit, and the inverter circuit is for coupling with the AC motor;
where, the second switch sub-circuit receives the second AC signal from the secondary winding and a second drive signal from the control circuit, and converts the second AC signal to a second DC signal based on the second drive signal; the inverter circuit receives the second DC signal from the second switch sub-circuit and the fourth control signal from the control circuit, and converts the second DC signal to the AC drive signal based on the fourth control signal.

5. The motor power source regulation circuit according to any of claim 1 to claim 4, wherein,
the first switch sub-circuit comprises a first capacitor, a first switch tube, a second switch tube, a third switch tube, a fourth switch tube, a second capacitor and a first inductor;
where, the first end of the first capacitor is coupled with the first end of the power factor correction circuit, the first end of the first switch tube and the first end of the second switch tube; the second end of the first capacitor is coupled with the second end of the power factor correction circuit, the second end of the third switch tube and the second end of the fourth switch tube; the second end of the first switch tube is coupled with the first end of the third switch tube and the first end of the second capacitor; the second end of the second switch tube is coupled with the first end of the fourth switch tube and the second end of the primary winding; the second end of the second capacitor is coupled with the first end of the first inductor; the second end of the first inductor is coupled with the first end of the primary winding;
the third ends of the first switch tube, the second switch tube, the third switch tube and the fourth switch tube are connected with the control circuit.

6. The motor power source regulation circuit according to any of claim 1 to claim 4, wherein,
the power factor correction circuit comprises a first diode, a second diode, a third diode, a fourth diode, a fifth inductor, a sixth inductor, a fifth diode, a sixth diode, a fifteenth switch tube, a sixteenth switch tube and a sixth capacitor;
where, the first end of the first diode is coupled with the second end of the third diode and the first end of the AC power source; the second end of the first diode is coupled with the second end of the second diode, the first end of the fifth inductor and the first end of the sixth inductor; the first end of the second diode is coupled with the second end of the fourth diode and the second end of the AC power source; the first end of the third diode is coupled with the first end of the fourth diode, the second end of the fifteenth switch tube, the second end of the sixteenth switch tube and the second end of the sixth capacitor; the second end of the fifth inductor is coupled with the first end of the fifth diode and the first end of the fifteenth switch tube; the second end of the sixth inductor is coupled with the first end of the sixth diode and the first end of the sixteenth switch tube; the second end of the fifth diode is coupled with the second end of the sixth diode and the first end of the sixth capacitor; the third ends of the fifteenth switch tube and the sixteenth switch tube are coupled with the control circuit.

7. A motor power source control method, wherein, the motor power source control method comprises:
receiving an AC input signal from an external AC power source;
regulating a first characteristic parameter of a first control signal based on the AC input signal;
converting the AC input signal to a first DC signal based on the first control signal;
converting the first DC signal to a first AC signal based on the first drive signal;
converting the first AC signal to two or more second AC signals;
converting the second AC signal to a DC drive signal and outputting the DC drive signal to an external DC motor;
converting the second AC signal to an AC drive signal and outputting the AC drive signal to an external AC motor.

8. The motor power source control method according to claim 7, wherein, a step after converting the AC input signal to a first DC signal based on the first control signal and before converting the first DC signal to a first AC signal based on the first drive signal also comprises:
regulating a fifth characteristic parameter of a fifth control signal based on a power input signal; where, the fifth characteristic parameter is positively correlated with the power input signal;
converting and superposing the power input signal to/with the first DC signal based on the fifth control signal.

9. The motor power source control method according to claim 7, wherein, the step of converting the second AC signal to an AC drive signal comprises:
converting the second AC signal to a second DC signal based on a second drive signal;
converting the second DC signal to an AC drive signal based on a fourth control signal.

10. An electronic device, wherein, the electronic device comprises a coupled shell and a motor power source regulation circuit;
where, the motor power source regulation circuit is a motor power source regulation circuit mentioned in any of claim 1 to claim 6.
